(19) **Europäisches Patentamt / European Patent Office / Office européen des brevets**

(11) **EP 4 261 305 A1**

(12) **EUROPEAN PATENT APPLICATION**
published in accordance with Art. 153(4) EPC

(43) Date of publication:
**18.10.2023   Bulletin 2023/42**

(21) Application number: **21903857.7**

(22) Date of filing: **09.12.2021**

(51) International Patent Classification (IPC):
*C22C 38/00* (2006.01)        *C22C 38/02* (2006.01)
*C22C 38/04* (2006.01)        *C22C 38/06* (2006.01)
*C22C 38/14* (2006.01)        *C22C 38/16* (2006.01)
*C21D 9/46* (2006.01)        *C21D 8/02* (2006.01)
*C23C 2/06* (2006.01)

(52) Cooperative Patent Classification (CPC):
**C21D 8/02; C21D 9/46; C22C 38/00; C22C 38/02; C22C 38/04; C22C 38/06; C22C 38/14; C22C 38/16; C23C 2/06**

(86) International application number:
**PCT/KR2021/018611**

(87) International publication number:
**WO 2022/124811 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2020   KR 20200173352**

(71) Applicant: **POSCO Co., Ltd**
**Pohang-si, Gyeongsangbuk-do 37859 (KR)**

(72) Inventors:
• **HA, Yu-Mi**
  **Gwangyang-si, Jeollanam-do 57807 (KR)**
• **YEOM, Jun-Sung**
  **Gwangyang-si, Jeollanam-do 57807 (KR)**
• **HAN, Sang-Ho**
  **Gwangyang-si, Jeollanam-do 57807 (KR)**
• **HAN, Seong-Ho**
  **Gwangyang-si, Jeollanam-do 57807 (KR)**
• **CHOI, Yong-Hoon**
  **Gwangyang-si, Jeollanam-do 57807 (KR)**

(74) Representative: **Meissner Bolte Partnerschaft mbB**
**Patentanwälte Rechtsanwälte**
**Postfach 86 06 24**
**81633 München (DE)**

(54) **HIGH STRENGTH PLATED STEEL SHEET HAVING EXCELLENT FORMABILITY AND SURFACE PROPERTY, AND METHOD FOR MANUFACTURING SAME**

(57)      According to one aspect of the present invention, it is possible to provide: a plated steel sheet having excellent surface quality, as well as having excellent formability while also having high strength characteristics; and a method for manufacturing same.

**EP 4 261 305 A1**

**Description**

**Technical Field**

The present disclosure relates to a plated steel sheet and a method for manufacturing the same, and more particularly, to a plated steel sheet having high strength with excellent formability and surface quality, which can be preferably applied as an exterior plate material for automobiles and a method for manufacturing the same.

**Background Art**

Material produced by press processing cold-rolled plated steel sheet is mainly used as an exterior plate material for automobiles. Since the exterior plate material for automobiles may be press-processed into various forms, the cold-rolled plated steel sheet subjected to press processing is required to have excellent formability. In addition, as a carbon dioxide emission control method, improving fuel efficiency of automobiles, such as setting a target for improving fuel efficiency of new automobiles, introducing a preferential tax system for low-fuel efficiency automobiles, and the like, is required, through weight reduction of automobile bodies, and slimming of steel sheet for automobile bodies is evaluated as the most powerful means to reduce the weight of the automobile bodies. Meanwhile, from the viewpoint of securing safety of automobile bodies, not only slimming but also high-strength of the steel sheets for automobile bodies are required. High-strength properties and formability are physical properties that are difficult to be simultaneously achieved, and various attempts have been made in the industry to achieve these properties.

As an example, in order to improve the formability of steel sheets for automobiles, so-called interstitial free steel (IF) steel has been developed by adding titanium (Ti) or niobium (Nb) alone or in a combination thereof to ultralow carbon cold-rolled steel sheets and precipitating solid solution elements such as C, N, and S in a form of carbides and nitrides, and increasing elongation and a plastic deformation ratio, to improve the formability thereof. In addition, as an attempt to improve the strength of the steel sheet, research is being actively conducted on a method to promoting high strength in steel by including solid-solution strengthening elements such as silicon (Si), manganese (Mn), and phosphorus (P) in steel.

Phosphorus (P) is a component that can economically and effectively promote high strength of steel, but is also a component that deteriorates surface quality of a plated steel sheet. Therefore, there are various technical difficulties in applying the method of promoting high strength through addition of phosphorus (P) to a steel sheet for an exterior plate material for automobiles. Phosphorus (P) is an element that is very easily segregated. Phosphorus (P) segregated on the surface of the slab is elongated in a longitudinal direction of the steel sheet by hot rolling and cold rolling to form a phosphorus (P)-concentrated layer on a surface of a coil, and linear defects may occur on a surface of the plated steel sheet by the phosphorus (P)-concentrated layer remaining on the surface of the steel sheet. Therefore, although the addition of phosphorus (P) is the most economical and effective technique for increasing the strength of steel sheet, but it causes deterioration in the surface quality of plated steel sheet, so that it has not been applied to an exterior plate material for automobiles.

In Patent Document 1 regarding a method for manufacturing an alloying hot-dip galvanized steel sheet using a steel sheet having a content of P of 0.03% or more as a base material, a method of performing grinding of a surface of the steel sheet according to an amount of P in the steel sheet in order to solve non-uniformity of the surface of the steel sheet, and then forming a plating layer has been proposed. As described above, although it is helpful to secure surface quality of the plated steel sheet to some extent, when surface grinding of the steel sheet is performed, but the surface grinding is necessarily performed, so that it is accompanied by a disadvantage that productivity is inevitably lowered and yield of the steel sheet is lowered due to grinding.

Therefore, there is an urgent need to research and develop a plated steel sheet that has high-strength characteristics, excellent formability and surface quality, and can effectively prevent deterioration in yield and productivity and a method for manufacturing the same.

(Prior art Document)

(Patent Document) Japanese Patent Publication No. 2004-169160

**Summary of Invention**

**Technical Problem**

An aspect of the present disclosure is to provide a plated steel sheet having high strength characteristics, excellent formability, and excellent surface quality, and a method for manufacturing the same.

An aspect of the present disclosure is to provide a plated steel sheet capable of effectively preventing deterioration in yield and productivity and a method for manufacturing the same.

An object of the present disclosure is not limited to the above description. The object of the present disclosure will be understood from the entire content of the present specification, and a person skilled in the art to which the present disclosure pertains will understand an additional object of the present disclosure without difficulty.

**Solution to Problem**

According to an aspect of the present disclosure, a plated steel sheet includes base iron; and a plating layer provided on at least one surface of the base iron, wherein the base iron includes by weight: 0.002 to 0.01% of carbon (C), 0.1% or less of silicon (Si), 0.4 to 1.0% of manganese (Mn), 0.04 to 0.1% of phosphorus (P), 0.01% or less of sulfur (S), 0.005% or less of nitrogen (N), 0.1% or less of aluminum (S.Al), 0.005 to 0.03% of titanium (Ti), 0.01 to 0.05% of niobium (Nb), 0.06 to 0.1% of copper (Cu), 0.0015% or less of boron (B), a content of molybdenum (Mo) in which YM, defined by the following Relational Expression 1, satisfies a range of 0.03 or more and 0.1 or less of, with a balance of Fe and inevitable impurities, wherein the base iron includes ferrite as a matrix structure, wherein in the base iron, E, defined by the following Relational Expression 2, satisfies a range of 0 or more and 60 or less.

$$[\text{Relational Expression 1}]$$

$$\text{YM} = [\text{P}] \ * \ (1 + 0.5*[\text{Mo}] + 0.1*[\text{Mn}])$$

In Relational Expression 1, [P], [Mo], and [Mn] refer to contents (weight %) of phosphorus (P), molybdenum (Mo), and manganese (Mn) contained in the base iron, respectively.

$$[\text{Relational Expression 2}]$$

$$\text{E} = 1250*\text{YM} - 5*\text{X}$$

In Relational Expression 2, YM is calculated by the Relational Expression 1, X refers to an average grain size (um) of the ferrite.

In a three-dimensional crystal orientation density function (ODF) {Φ1, Φ, Φ2} of a surface portion of the base iron, an intensity of ODF{0°,0°,45°} may be 2.0 or less, and an intensity of ODF{30°,55°,45°} may be 5 or more and 9 or less.

A fraction of the ferrite may be 95% or more by area, and an average grain size of the ferrite may be 15 um or less.

The plating layer may be any one selected from a zinc-based plating layer, an aluminum-based plating layer, an alloyed zinc-based plating layer, and an alloyed aluminum-based plating layer.

The plated steel sheet may have a tensile strength of 390 MPa or more, an elongation of 28% or more, and an r value of 1.2 or more.

According to an aspect of the present disclosure, a method for manufacturing a plated steel sheet, may include operations of: heating a slab including by weight: 0.002 to 0.01% of carbon (C), 0.1% or less of silicon (Si), 0.4 to 1.0% of manganese (Mn), 0.04 to 0.1% of phosphorus (P), 0.01% or less of sulfur (S), 0.005% or less of nitrogen (N), 0.1% or less of aluminum (S.Al), 0.005 to 0.03% of titanium (Ti), 0.01 to 0.05% of niobium (Nb), 0.06 to 0.1% of copper (Cu), 0.0015% or less of boron (B), a content of molybdenum (Mo) in which YM, defined by the following Relational Expression 1, satisfies a range of 0.03 or more and 0.1 or less, with a balance of Fe and inevitable impurities at a temperature within a range of 1100 to 1300°C; subjecting the heated slab to hot rolling at a finish rolling temperature ($T_f$) satisfying the following Relational Expression 3 to obtain a hot-rolled steel sheet; coiling the hot-rolled steel sheet in a temperature range of 600 to 650°C; pickling the hot-rolled steel sheet and then cold rolling the hot-rolled steel sheet at a reduction ratio of 70 to 83% to obtain a cold-rolled steel sheet; annealing the cold-rolled steel sheet in a temperature range of 750 to 830°C; immersing the annealed cold-rolled steel sheet in a plating bath to obtain a plated steel sheet; and optionally alloying the plated steel sheet in a temperature range of 480 to 610°C.

$$[\text{Relational Expression 1}]$$

$$\text{YM} = [\text{P}] \ * \ (1 + 0.5*[\text{Mo}] + 0.1*[\text{Mn}])$$

In Relational Expression 1, [P], [Mo], and [Mn] refer to contents (weight %) of phosphorous (P), molybdenum (Mo), and manganese (Mn) included in the slab, respectively.

$$[Relational\ Expression\ 3]$$

$$920 - 300 * [3*[P] - \{(31/48)*[Ti] + (31/93)*[Nb]\}]$$

$$< T_f(^\circ C) < 920 + 300 * [3*[P] - \{(31/48)*[Ti] + (31/93)*[Nb]\}]$$

In Relational Expression 3, [P], [Ti], and [Nb] refer to contents (weight %) of phosphorous (P), titanium (Ti), and niobium (Nb) included in the slab, respectively.

The plating bath may be any one selected from a zinc-based plating bath and an aluminum-based plating bath.

The method may further include subjecting the plated steel sheet or the alloyed plated steel sheet to temper rolling at the reduction ratio of 0.4 to 1.2%.

Various and beneficial merits and effects of the present disclosure are not limited to the descriptions above, and may be more easily understood in a process of describing specific exemplary embodiments in the present disclosure.

**Advantageous Effects of Invention**

As set forth above, according to the present disclosure, a plated steel sheet not only having excellent formability and excellent surface quality while having high-strength characteristics to have desirable physical properties as an exterior plate material for automobiles, but also capable of securing high yield, and a method for manufacturing the same may be provided.

The means for solving the above problems do not enumerate all the features of the present invention, and the various features of the present invention and the advantages and effects thereof will be understood in more detail with reference to the specific embodiments and examples below.

**Best Mode for Invention**

The present disclosure relates to a high-strength plated steel sheet having excellent formability and a method for manufacturing the same. Hereinafter, preferred embodiments of the present disclosure will be described. Hereinafter, embodiments of the present disclosure may be modified in various forms, and the scope of the present disclosure should not be construed as being limited to the embodiments described below. The present embodiments are provided to those skilled in the art to further elaborate the present disclosure.

As a result of in-depth research to solve the problems described above in the prior art, the inventors of the present disclosure have found that formability may be secured by minimizing solid solution elements such as carbon (C), nitrogen (N), and sulfur (S) by adding titanium (Ti) and/or niobium (Nb), which are strong carbonitride forming elements, in steel, and at the same time, high-strength characteristics may be secured by adding phosphorus (P), and surface quality of the plated steel sheet may be effectively secured by controlling an amount of molybdenum (Mo) added to be within an optimal range, and thus the present disclosure was provided.

Hereinafter, a plated steel sheet according to an aspect of the present disclosure will be described in more detail.

According to an aspect of the present disclosure, a plated steel sheet includes base iron; and a plating layer provided on at least one surface of the base iron, wherein the base iron includes by weight: 0.002 to 0.01% of carbon (C), 0.1% or less of silicon (Si), 0.4 to 1.0% of manganese

(Mn), 0.04 to 0.1% of phosphorus (P), 0.01% or less of sulfur (S), 0.005% or less of nitrogen (N), 0.1% or less of aluminum (S.Al), 0.005 to 0.03% of titanium (Ti), 0.01 to 0.05% of niobium (Nb), 0.06 to 0.1% of copper (Cu), 0.0015% or less of boron (B), a content of molybdenum (Mo) in which YM, defined by the following Relational Expression 1, satisfies a range of 0.03 or more and 0.1 or less of, with a balance of Fe and inevitable impurities, wherein the base iron includes ferrite as a matrix structure, wherein in the base iron, E, defined by the following Relational Expression 2, satisfies a range of 0 or more and 60 or less.

$$[Relational\ Expression\ 1]$$

$$YM = [P] * (1 + 0.5*[Mo] + 0.1*[Mn])$$

In Relational Expression 1, [P], [Mo], and [Mn] refer to contents (weight %) of phosphorus (P), molybdenum (Mo), and manganese (Mn) contained in the base iron, respectively.

[Relational Expression 2]

$$E = 1250*YM - 5*X$$

In Relational Expression 2, YM is calculated by the Relational Expression 1, X refers to an average grain size (um) of the ferrite.

Hereinafter, a steel composition included in the base iron of the present disclosure will be described in more detail. Hereinafter, % represents a content of each element based on weight, unless otherwise particularly specified.

Carbon (C): 0.002 to 0.01%

Carbon (C) is an interstitial solid solution element, and is an element having a great effect on formation of a texture of a steel sheet during cold rolling and annealing processes. When an amount of carbon dissolved in steel increases, growth of crystal grains having {111} gamma (γ)-fiber textures, advantageous for drawing, is suppressed, and growth of crystal grains having {110} and {100} textures is promoted, so that drawability of an annealed plate deteriorates. Furthermore, when a content of C is excessive, a content of titanium (Ti) and niobium (Ni) required to precipitate the same as a carbide increases, which is not only disadvantageous in terms of economic efficiency, but also pearlite, or the like, may be generated to deteriorate formability. Therefore, in the present disclosure, an upper limit of the content of C may be limited to 0.01%. Preferably, the upper limit of the content of C may be 0.009%, and more preferably, the upper limit of the content of C may be 0.008%. However, when the content of C is excessively small, strength may not be sufficiently secured, so in the present disclosure, a lower limit of the content of C may be limited to 0.002%. Preferably, the lower limit of the content of C may be 0.003%.

Silicon (Si): 0.1% or less

Silicon (Si) is an element contributing to an increase in strength by solid solution strengthening. In the present disclosure, Si may be added to exhibit such an effect of increasing strength. In the present disclosure, a lower limit of a content of Si is not particularly limited, 0% may be excluded from the lower limit thereof. Preferably, the lower limit of the content of Si may be 0.01%, and more preferably, the lower limit of the content of Si may be 0.02%. However, when the content of Si is excessive, surface scale defects are may be caused to deteriorate plating surface properties, so in the present disclosure, an upper limit of the content of Si may be limited to 0.1%. Preferably, the upper limit of the content of Si may be 0.07%, and more preferably, the upper limit of the content of Si may be 0.05%.

Manganese (Mn): 0.4 to 1.0%

Manganese (Mn) is a solid solution strengthening element not only contributing to increase in strength, but also serving to precipitate S in steel as MnS. In the present disclosure, in order to obtain such an effect, 0.4% or more of manganese (Mn) may be added. Preferably, a lower limit of a content of Mn may be 0.45%. However, when the content of Mn is excessive, surface quality deterioration due to oxides may occur, so in the present disclosure, an upper limit of the content of Mn may be limited to 1.0%. Preferably, the upper limit of the content of Mn may be 0.9%, and more preferably, the upper limit of the content of Mn may be 0.8%.

Phosphorous (P): 0.04 to 0.1%

Phosphorous (P) is the most effective element for securing strength of steel, having the most excellent solid-solution effect, and without significantly impairing drawability. In the present disclosure, for such an effect, 0.04% or more of phosphorous (P) may be added. Preferably, a content of P may be 0.042% or more, and more preferably, the content of P may be 0.045% or more. On the other hand, when phosphorous (P) is excessively added, secondary brittleness and surface linear defects due to P segregation may occur, so in the present disclosure, an upper limit of the content of P may be limited to 0.1%. Preferably, the upper limit of the content of P may be 0.09%, and more preferably, the upper limit of the content of P may be 0.08%.

Sulfur (S): 0.01% or less, Nitrogen (N): 0.005% or less

Sulfur (S) and Nitrogen (N) are components which are inevitably added as an impurity present in steel, but it is preferable to control the content of sulfur (S) and nitrogen (N) as low as possible in order to secure excellent welding characteristics. Therefore, in the present disclosure, the content of S may be limited to 0.01% or less (including 0%), and the content of N may be limited to 0.005% or less (including 0%). In addition, considering the amount which is inevitably added, in the present disclosure, 0% may be excluded from a lower limit of the content of sulfur (S) and nitrogen (N).

Aluminum (S.Al): 0.1% or less

Aluminum (Al) is a component contributing to improving drawability and ductility of steel by precipitating AlN, and in the present disclosure, in order to secure such an effect, aluminum (Al) may be added. A preferable content of aluminum (Al) may exceed 0%, and a more preferable content of aluminum (Al) may be 0.01% or more. On the other hand, when aluminum (Al) is excessively added, aluminum (Al) inclusions may be excessively formed during a steelmaking operation, which may cause internal defects in the steel sheet, so in the present disclosure, an upper limit of the content of aluminum (Al) may be limited to 0.1%.

Titanium (Ti): 0.005 to 0.03%

Titanium (Ti) is an element greatly contributing to improving drawability of the steel sheet by reacting with dissolved carbon and dissolved nitrogen to precipitate titanium (Ti)-based carbonitrides during hot rolling. In the present disclosure, in order to secure such an effect, 0.005% or more of titanium (Ti) may be added. Preferably, a lower limit of a content of Ti may be 0.007%. On the other hand, when the content of Ti is excessive, it is difficult to manage inclusions during a steelmaking operation, so that inclusion property defects may occur. Therefore, in the present disclosure, an upper limit of the content of Ti may be limited to 0.03%. Preferably, the upper limit of the content of Ti may be 0.025%.

Niobium (Nb): 0.01 to 0.05%

Niobium (Ni) is an element contributing to solute drag and precipitate pinning during hot rolling, and is the most effective element capable of forming very fine crystal grains through rolling and cooling processes when an austenite non-recrystallization region is widened at high temperature. In the present disclosure, 0.01% or more of niobium (Nb) may be added to promote such crystal grain refinement. Preferably, a lower limit of a content of Nb may be 0.02%. On the other hand, when niobium (Nb) is excessively added, hot-rolling load may be excessive due to an increase in high-temperature strength, so in the present disclosure, an upper limit of the content of Nb may be limited to 0.05%. Preferably, the upper limit of the content of Nb may be 0.045%.

Copper (Cu): 0.06 to 0.1%

Copper (Cu) is a component contributing to improving strength of steel. In the disclosure, for such an effect, 0.06% or more of copper (Cu) may be added. Preferably, a lower limit of a content of copper (Cu) may be 0.065%, and more preferably, the lower limit of the content of copper (Cu) may be 0.07%. On the other hand, when an amount of copper (Cu) added is excessive, which leads to grain boundary brittleness or costs, so in the present disclosure, an upper limit of the Cu may be limited to 0.1%.

Boron (B): 0.0015% or less

Boron (B) is a component to prevent secondary processing brittleness due to an addition of phosphorous (P) in steel, and in the present disclosure, boron (B) may be added to prevent secondary processing brittleness. Preferably, a lower limit of a content of boron (B) may be 0.0002%, and more preferably, the lower limit of the content of boron (B) may be 0.0004%. However, when the content of boron (B) is excessive, ductility of the steel sheet is deteriorated, so in the present disclosure, an upper limit of the content of B may be limited to 0.0015%. Preferably, the upper limit of the content of B may be 0.001%.

Molybdenum (Mo) : a content of molybdenum (Mo) in which YM, defined by the following Relational Expression 1 satisfies a range of 0.03 or more and 0.1 or less

As a result of conducting in-depth research on measures to prevent surface quality deterioration due to grain boundary segregation of phosphorus (P) while promoting high strength through the addition of phosphorus (P), the inventors of the present invention have found that when an appropriate amount of molybdenum (Mo) is added, molybdenum (Mo) having high affinity for phosphorous (P), forms a MoP compound, thereby effectively preventing grain boundary segregation of phosphorus (P). Therefore, the inventors of the present invention have studied various aspects of the optimal molybdenum (Mo) content that can achieve both high strength characteristics and surface quality of steel, and when the content of molybdenum (Mo) added to the steel is controlled to be within an optimal range to the content of phosphorus (P) and manganese (Mn), which contribute to the improvement of the strength of the steel but impair the surface quality of the steel, it was possible to derive that both high strength characteristics and excellent surface quality were may be secured. Therefore, in the present disclosure, the content of molybdenum (Mo) may be limited so that a YM value, defined by the following Relational Expression 1 satisfies a specific range.

```
[Relational Expression 1]

YM = [P] * (1 + 0.5*[Mo] + 0.1*[Mn])
```

In Relational Expression 1, [P], [Mo], and [Mn] mean the contents (weight %) of phosphorus (P), molybdenum (Mo), and manganese (Mn) included in the base iron, respectively.

In the present disclosure, a lower limit of the YM value defined by the Relational Expression 1 may be limited to 0.03 in order to secure the strength of steel. Preferably, a lower limit of the YM value may be 0.035, and more preferably, the lower limit of the YM value may be 0.04. As the YM value increases, which is advantageous in terms of securing strength, but disadvantageous in terms of securing surface quality, so an upper limit of the YM value may be limited to 0.1 in the present disclosure. Preferably, the upper limit of the YM value may be 0.095, and more particularly, the upper limit of the YM value may be 0.09.

The base iron of the present disclosure may include a balance of Fe and other inevitable impurities in addition to the above-mentioned components. However, in a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure. Moreover, the additional addition of effective components other than the above-mentioned components is not entirely excluded.

The base iron of the present disclosure may include ferrite as a base structure, and may further include other microstructures such as pearlite, which are inevitably formed, as a remaining structure. Since the base iron of the present disclosure includes ferrite as a base structure, it is possible to effectively secure the formability of the plated steel sheet. In the present disclosure, a fraction of ferrite may be 95% or more by area, and a more preferable fraction of ferrite may be 99% or more by area.

In the base iron of the present disclosure, E, defined by the following Relational Expression 2 may satisfy a range of 0 or more and 60 or less.

```
[Relational Expression 2]

E = 1250*YM - 5*X
```

In Relational Expression 2, YM is calculated by the Relational Expression 1, and X refers to an average grain size (um) of ferrite.

The inventor of the present invention has conducted in-depth research on conditions for maximizing formability under conditions in which both high strength characteristics and excellent surface quality are achieved, and have found that it is possible to achieve both high strength characteristics and excellent surface quality by controlling a correlation between the YM value calculated by Relational Equation 1 and the average grain size of the ferrite structure.

Since in the present disclosure, an E value, calculated by the Relational Expression 2 is limited to 0 or more, the strength of the plated steel sheet may be effectively secured, and a more preferable lower limit of the E value may be 10. In addition, in the present disclosure, the E value, calculated by Relational Expression 2 is limited to 60 or less, the formability of the plated steel sheet may be effectively secured. In addition, as a non-limiting example, an average grain size(X) of ferrite of the present disclosure may be 5 um or more and 15 um or less.

In a three-dimensional crystal orientation density function (ODF) {$\Phi 1, \Phi, \Phi 2$} of a surface portion of the base iron, intensity of ODF{0°,0°,45°} may be 2.0 or less, and ODF{30°,55°,45°} may be greater than or equal to 5 and less than or equal to 9. The surface portion of the base iron may mean a point from the surface of the base iron to 1/6 of the thickness of the base iron. The intensity of ODF{0°,0°,45°} represents intensity measured from a three-dimensional crystal orientation density function (ODF) of the surface portion when $\Phi$ is 0°, $\Phi 1$ is 0°, and $\Phi 2$ is 45°, and intensity of the ODF {30°,55°,45°} represents intensity measured intensity measured from a three-dimensional crystal orientation density function (ODF) of the surface portion when $\Phi$ is 55°, $\Phi 1$ is 30°, and $\Phi 2$ is 45°. A value of intensity of the crystal orientation density function (ODF) may be obtained through electron backscatter diffraction (EBSD), and an intensity value of the density function (ODF) of the crystal orientation may be easily measured by a person skilled in the art using a conventional technical means.

The inventor of the present invention has repeatedly studied to solve the problem of poor surface formability due to non-uniform structure of the surface portion during processing, and as a result thereof, in the density function (ODF){Φ1,Φ,Φ2} of the three-dimensional crystal orientation of the surface portion described above, when the intensities of ODF{0°,0°,45°} and ODF{30°,55°,45°} satisfy specific values, it was found that a gamma (γ)-fiber texture may be developed, and accordingly it not only has excellent surface formability, but also it may be suitably used as a steel material for an exterior plate material for automobiles.

Therefore, in the present disclosure, in the density function (ODF) {Φ1,Φ,Φ2} of the three-dimensional crystal orientation of the surface portion of the base iron, since the intensity of ODF {0°,0°,45°} is limited to 2.0 or less, and the intensity of ODF {30°,55°,45°} is limited to 5 or more and 9 or less, surface formability can be effectively secured.

The plated steel sheet according to an aspect of the present disclosure includes a plating layer formed on one surface of base iron. The plating layer of the present disclosure may be a hot dipping layer or an alloying plating layer, and as a non-limiting example, the plating layer of the present disclosure may be any one selected from a zinc-based plating layer, an aluminum-based plating layer, an alloyingzinc-based plating layer, or an alloyingaluminumbased plating layer.

The plated steel sheet according to an aspect of the present disclosure may have a tensile strength of 390 MPa or more, an elongation of 28% or more, and an r value of 1.2 or more. In addition, the plated steel sheet according to an aspect of the present disclosure can effectively suppress occurrence of surface linear defects. Accordingly, the present disclosure may provide a plated steel sheet having excellent formability and excellent surface quality while having high-strength characteristics, to have desired physical properties as an exterior plate of automobiles.

Hereinafter, a method for manufacturing a plated steel sheet according to an aspect of the present disclosure will be described in more detail.

According to an aspect of the present disclosure, a method for manufacturing a plated steel sheet, includes operations of: heating a slab having predetermined compositions at a temperature within a range of 1100 to 1300°C; hot rolling the heated slab at a finish rolling temperature($T_f$) satisfying the following Relational Expression 3 to obtain a hot-rolled steel sheet; pickling the hot-rolled steel sheet and then cold rolling the hot-rolled steel sheet at a reduction ratio of 70 to 83% to obtain a cold-rolled steel sheet; annealing the cold-rolled steel sheet in a temperature range of 750 to 830°C; immersing the annealed cold-rolled steel sheet in a plating bath to obtain a plated steel sheet; and optionally alloying the plated steel sheet in a temperature range of 480 to 610°C.

$$[\text{Relational Expression 3}]$$

$$920 - 300 * [3*[P] - \{(31/48)*[Ti] + (31/93)*[Nb]\}]$$

$$< T_f(°C) < 920 + 300 * [3*[P] - \{(31/48)*[Ti] + (31/93)*[Nb]\}]$$

In the Relational Expression 3, [P], [Ti], and [Nb] refer to contents (weight %) of phosphorus (P), titanium (Ti), and niobium (Nb) included in the slab, respectively.

Slab preparing and heating

A steel slab having predetermined components is prepared. Since the steel slab of the present disclosure has an alloy composition corresponding to the alloy composition of base iron described above, the description of the alloy composition of the steel slab is substituted for the description of the alloy composition of the base iron described above.

The prepared slab may be heated at 1100 to 1300°C. When a slab heating temperature is excessively low, an excessive rolling load may be caused during hot rolling, so a lower limit of the slab heating temperature may be limited to 1100°C. When the slab heating temperature is excessively high, surface scale defects may be problematic, so an upper limit of the slab heating temperature may be limited to 1300°C.

Hot rolling

The heated slab may be hot rolled to provide a hot-rolled steel sheet. As a result of conducting in-depth research on process conditions that may secure excellent formability and surface quality while having high-strength characteristics, the present inventors of the present invention have found that hot rolling is performed in a range in which a finish rolling temperature is Ar3 or higher, but the finish rolling temperature should be strictly controlled according to relative contents of phosphorous (P), titanium (Ti), and niobium (Nb) included in the steel slab, and the following Relational Expression 3 was derived in relation to the finish rolling temperature ($T_f$).

[Relational Expression 3]

$$920 - 300 * [3*[P] - \{(31/48)*[Ti] + (31/93)*[Nb]\}]$$

$$< T_f(^{\circ}C) < 920 + 300 * [3*[P] - \{(31/48)*[Ti] + (31/93)*[Nb]\}]$$

In the Relational Expression 3, [P], [Ti], and [Nb] refer to contents (weight %) of phosphorus (P), titanium (Ti), and niobium (Nb) included in the slab, respectively.

When the finish rolling temperature ($T_f$) specified by Relational Expression 3 is not reached, a microstructure of a final steel sheet may be outside of the desired range of the present disclosure so that and formability may be deteriorated. In addition, when the finish rolling temperature ($T_f$) defined by Relational Expression 3 is exceeded, the microstructure of the final steel sheet may be outside of the desired range of the present disclosure so that strength characteristics or surface quality may be deteriorated. Therefore, the present invention can provide a hot-rolled steel sheet by performing hot rolling at a finish rolling temperature ($T_f$) satisfying the Relational Expression 3.

Coiling

The hot-rolled steel sheet obtained by hot rolling may be coiled in a temperature range of 600 to 650°C. When the coiling temperature is excessively low, precipitates such as Ti(Nb)C, or the like, are not sufficiently generated, resulting in a large amount of solid solution carbon, thereby affecting behavior such as recrystallization, grain growth, and the like, during annealing, so that there may be a problem in securing desired strength and elongation. Therefore, in the present disclosure, a lower limit of the coiling temperature may be limited to 600°C. On the other hand, when the coiling temperature is excessively high, surface quality may be deteriorated due to secondary scale generation, and in the present disclosure, an upper limit of the coiling temperature may be limited to 650°C.

Pickling and cold rolling

After uncoiling the coiled hot-rolled steel sheet, picking for removing surface scales may be performed, and cold rolling may be performed at a reduction ratio of 70 to 83% to obtain a cold-rolled steel sheet. When the cold rolling reduction ratio is lower than a certain level, a {111} texture may not grow sufficiently, resulting in poor formability. Therefore, in the present disclosure, a lower limit of the cold rolling reduction ratio may be limited to 70%. A more preferable lower limit of the reduction ratio may be 71%. On the other hand, when the reduction ratio during cold rolling is excessive, shape defects may occur due to excessive load of rolling roll, so, in the present disclosure, an upper limit of the cold rolling reduction ratio may be limited to 83%. A more preferable upper limit of the reduction ratio may be 80%.

Annealing

The cold-rolled steel sheet obtained by cold rolling may be heated to a temperature, equal to or higher than a recrystallization temperature and subjected to an annealing treatment. When the annealing temperature is a certain level or less, deformation caused by rolling may not be sufficiently removed, and ferrite recrystallization is not completed, so the elongation may be deteriorated. Therefore, in the present disclosure, a lower limit of an annealing temperature may be limited to 750°C. On the other hand, when the annealing temperature is excessively high, crystal grain growth after completion of recrystallization may proceed, resulting in poor strength or poor surface quality. Therefore, in the present disclosure, an upper limit of the annealing temperature may be limited to 830°C.

Plating and selective alloying

The annealed cold-rolled steel sheet may be immersed in a plating bath to form a plating layer. The plating bath used in the plating of the present disclosure may be a plating bath commonly used in the manufacturing of a plated steel sheet for an exterior plate of automobiles, and preferably may be any one selected from a zinc-based plating bath and an aluminum-based plating bath. Alloying may be selectively performed after immersion in a plating bath, and a preferred alloying temperature may be in a range of 480 to 610°C.

The plated steel sheet manufactured by the manufacturing method described above may not only have a tensile strength of 390 MPa or more, an elongation of 28% or more, and an r value of 1.2 or more, but also have excellent surface quality.

**Mode for Invention**

Hereinafter, a plated steel sheet of the present disclosure and a method for manufacturing the same will be described in more detail through specific examples. Hereinafter, preferred embodiments of the present disclosure will be described. Embodiments of the present disclosure may be modified in various forms, and the scope of the present disclosure should not be construed as being limited to the embodiments described below. The scope of the present invention may be determined by the matters described in the claims and the matters reasonably inferred therefrom.

(Example)

A steel slab having a thickness of 250 mm having the alloy composition described in Table 1 below was heated to 1250°C, and then the process conditions of Table 2 was applied to manufacture a plated steel sheet having an average thickness of 0.85 mm. In this case, as a plating bath, a zinc (Zn) plating bath containing 0.13% of aluminum (Al) was used. Each specimen was cut in a thickness direction, and then a fraction and an average grain size of a microstructure was measured using an optical microscope (OM), and the results thereof were shown in Table 3. In addition, after performing electropolishing on each specimen, a three-dimensional orientation density function (ODF) of a surface portion of base iron (from a surface of base iron to a 1/6 point of a thickness of the base iron) of each specimen was measured using an electron backscatter diffraction (EBSD), and the results thereof were described together in Table 3.
A tensile test was performed on each specimen using a tensile tester, and a tensile strength (TS), yield point (YP), and breaking elongation (T-El) were measured and described in Table 4. Specifically, after measuring a width, length, and thickness of the specimen, the specimen was mounted on the tensile tester and waited until the specimen was destroyed, and then the tensile strength, yield point, and breaking elongation of the specimen were measured. The yield point is a limiting stress when elastic deformation occurs, and a value thereof is commonly expressed through a 0.2% offset, the tensile strength refers to a value obtained by dividing a maximum load by an original cross-section. The breaking elongation represents, by a percentage amount, an amount of deformation of the specimen after fracture from the tensile test.
Meanwhile, to evaluate an r value, which is an index of deep drawing, JIS5 tensile test specimens were taken for each specimen for three directions: a parallel direction, a 45° direction, and a perpendicular direction, to a rolling direction, and an r value of each test piece was measured and evaluated. The r value may be obtained by measuring a change value of a thickness of the sheet and a change value of a width of the sheet at the time of performing about 15% tensile deformation in the tensile test described above, and calculating a ratio of the change value of the width of the sheet to the thickness of the sheet. Then, when the r value, parallel to the rolling direction was set to $r_0$, the r value in the 45° direction was set to $r_{45}$, and the r value in the perpendicular direction was set to $r_{90}$, the r value was calculated using Relational Expression 4 using the r value in each direction.

$$[\text{Relational Expression 4}]$$

$$r = r_0 + 2 * r_{45} + r_{90}/4$$

Surface linear defects may be visually identified in a form of black lines, which can confirm the total number of linear defects per coil on a surface defect detector (SDD). Surface linear defects were evaluated as 'good' and 'poor' according to the criteria below.
Good: The number of linear defects on SDD being 100 or less

Bad: The number of linear defects on SDD exceeding 100

[Table 1]

| Steel type | C | Si | P | Mo | Mn | Cu | S | N | S.A1 | Ti | Nb | B | Relational Expression 1 |
|---|---|---|---|---|---|---|---|---|---|---|---|---|---|
| A | 0.004 | 0.025 | 0.045 | 0.05 | 0.48 | 0.08 | 0.002 | 0.002 | 0.035 | 0.01 | 0.035 | 0.0008 | 0.048 |
| B | 0.0038 | 0.03 | 0.051 | 0.058 | 0.51 | 0.07 | 0.003 | 0.001 | 0.036 | 0.008 | 0.033 | 0.0004 | 0.055 |
| C | 0.005 | 0.031 | 0.057 | 0.051 | 0.48 | 0.08 | 0.002 | 0.002 | 0.030 | 0.007 | 0.038 | 0.0006 | 0.061 |
| D | 0.007 | 0.034 | 0.065 | 0.065 | 0.65 | 0.08 | 0.003 | 0.001 | 0.036 | 0.021 | 0.041 | 0.0008 | 0.071 |
| E | 0.014 | 0.03 | 0.07 | 0.015 | 0.8 | 0.06 | 0.005 | 0.002 | 0.029 | 0.03 | 0.034 | 0.0007 | 0.076 |
| F | 0.004 | 0.3 | 0.08 | 0.02 | 0.5 | 0.07 | 0.002 | 0.002 | 0.038 | 0.008 | 0.021 | 0.001 | 0.085 |
| G | 0.0041 | 0.028 | 0.15 | 0.056 | 0.51 | 0.065 | 0.004 | 0.002 | 0.035 | 0.008 | 0.025 | 0.0006 | 0.162 |
| H | 0.0052 | 0.035 | 0.02 | 0.061 | 0.49 | 0.07 | 0.003 | 0.002 | 0.037 | 0.015 | 0.041 | 0.0009 | 0.022 |
| I | 0.0068 | 0.025 | 0.095 | 0.15 | 0.6 | 0.068 | 0.002 | 0.002 | 0.042 | 0.025 | 0.029 | 0.0007 | 0.108 |
| J | 0.0034 | 0.031 | 0.099 | 0.1 | 0.59 | 0.089 | 0.003 | 0.002 | 0.032 | 0.009 | 0.038 | 0.0008 | 0.110 |
| K | 0.0048 | 0.033 | 0.05 | 0.045 | 0.3 | 0.09 | 0.003 | 0.002 | 0.033 | 0.008 | 0.011 | 0.001 | 0.053 |
| L | 0.0051 | 0.028 | 0.041 | 0.06 | 1.15 | 0.082 | 0.004 | 0.002 | 0.037 | 0.02 | 0.029 | 0.0009 | 0.047 |
| M | 0.0068 | 0.03 | 0.045 | 0.008 | 0.8 | 0.05 | 0.002 | 0.002 | 0.032 | 0.026 | 0.025 | 0.0005 | 0.049 |
| N | 0.0031 | 0.028 | 0.061 | 0.015 | 0.7 | 0.13 | 0.003 | 0.001 | 0.037 | 0.018 | 0.038 | 0.0004 | 0.066 |
| O | 0.0065 | 0.025 | 0.052 | 0.035 | 0.46 | 0.07 | 0.004 | 0.001 | 0.038 | 0.004 | 0.025 | 0.0008 | 0.055 |
| P | 0.0039 | 0.029 | 0.058 | 0.015 | 0.72 | 0.06 | 0.003 | 0.002 | 0.040 | 0.034 | 0.033 | 0.0006 | 0.063 |
| Q | 0.0069 | 0.031 | 0.051 | 0.025 | 0.56 | 0.06 | 0.003 | 0.001 | 0.040 | 0.019 | 0.008 | 0.0008 | 0.054 |

[Table 2]

| Specimen No. | Steel type | Finish rolling temperature (°C) | Coiling temperature (°C) | Cold reduction ratio (%) | Annealing temperature (°C) | Alloying temperature (°C) |
|---|---|---|---|---|---|---|
| 1 | A | 935 | 622 | 77 | 770 | 520 |
| 2 | B | 940 | 620 | 77 | 765 | 525 |
| 3 | C | 933 | 618 | 77 | 780 | 525 |
| 4 | C | 870 | 625 | 77 | 780 | 530 |
| 5 | C | 970 | 620 | 80 | 830 | 530 |
| 6 | D | 935 | 615 | 71 | 750 | 530 |
| 7 | E | 915 | 618 | 76 | 770 | 530 |
| 8 | F | 920 | 629 | 80 | 780 | 600 |
| 9 | G | 900 | 625 | 80 | 800 | 500 |
| 10 | H | 940 | 617 | 80 | 830 | 510 |
| 11 | I | 920 | 614 | 72 | 790 | 510 |
| 12 | J | 915 | 624 | 72 | 790 | 510 |
| 13 | K | 950 | 623 | 72 | 790 | 520 |
| 14 | L | 920 | 611 | 76 | 800 | 525 |
| 15 | M | 960 | 625 | 76 | 770 | 535 |
| 16 | N | 960 | 630 | 76 | 770 | 530 |
| 17 | O | 950 | 619 | 76 | 830 | 500 |
| 18 | P | 950 | 629 | 74 | 760 | 550 |
| 19 | Q | 960 | 635 | 77 | 800 | 500 |

[Table 3]

| Specimen No. | Steel type | Fraction of ferrite (area %) | Average grain size of ferrite ($\mu$m]) | [Relational Expression 2] | ODF{Φ1, Φ, Φ2} | |
|---|---|---|---|---|---|---|
| | | | | | ODF{0°, 0°, 45°} | ODF{30°, 55°,45°} |
| 1 | A | 100 | 7.2 | 24.35 | 0.7 | 7.5 |
| 2 | B | 100 | 7 | 33.85 | 1.05 | 6.5 |
| 3 | C | 100 | 8 | 36.49 | 0.89 | 7.6 |
| 4 | C | 100 | 3 | 61.49 | 2.2 | 3.1 |
| 5 | C | 100 | 16 | -3.51 | 0.5 | 7.4 |
| 6 | D | 100 | 8 | 49.17 | 0.59 | 6.5 |
| 7 | E | 98 | 9 | 50.16 | 4.1 | 3.5 |
| 8 | F | 100 | 8 | 66.00 | 3.1 | 1.8 |
| 9 | G | 100 | 5.5 | 174.81 | 2.1 | 4.9 |
| 10 | H | 100 | 15 | -48.01 | 0.5 | 6.5 |
| 11 | I | 100 | 6 | 104.78 | 3.4 | 4.1 |
| 12 | J | 100 | 9 | 92.24 | 3.6 | 4.7 |

(continued)

| Spec imen No. | Steel type | Fraction of ferrite (area %) | Average grain size of ferrite ($\mu$m]) | [Relational Expression 2] | ODF{$\Phi 1$, $\Phi$, $\Phi 2$} ODF{0°, 0°, 45°} | ODF{30°, 55°,45°} |
|---|---|---|---|---|---|---|
| 13 | K | 100 | 11 | 10.78 | 1.5 | 6.8 |
| 14 | L | 100 | 9 | 13.68 | 2.18 | 4.7 |
| 15 | M | 100 | 13 | -4.03 | 2.5 | 4.9 |
| 16 | N | 100 | 15 | 7.16 | 2.9 | 3.8 |
| 17 | O | 100 | 12 | 9.13 | 0.56 | 8.5 |
| 18 | P | 100 | 12 | 18.26 | 2.75 | 4.2 |
| 19 | Q | 100 | 18 | -21.88 | 0.9 | 8.5 |

[Table 4]

| Specimen No. | Steel type | Tensile strength (MPa) | Yield point (MPa) | Breaking elongation (%) | r value | Surface linear defects |
|---|---|---|---|---|---|---|
| 1 | A | 409 | 266 | 35 | 1.7 | Good |
| 2 | B | 415 | 250 | 35 | 1.6 | Good |
| 3 | C | 412 | 242 | 34 | 1.6 | Good |
| 4 | C | 408 | 265 | 32 | 1.1 | Bad |
| 5 | C | 373 | 230 | 37 | 1.6 | Good |
| 6 | D | 452 | 280 | 32 | 1.5 | Good |
| 7 | E | 500 | 354 | 22 | 0.8 | Bad |
| 8 | F | 456 | 315 | 28 | 1.1 | Bad |
| 9 | G | 498 | 355 | 22 | 0.7 | Bad |
| 10 | H | 348 | 210 | 36 | 1.8 | Good |
| 11 | I | 485 | 311 | 25 | 0.7 | Bad |
| 12 | J | 510 | 325 | 27 | 1.2 | Bad |
| 13 | K | 387 | 235 | 36 | 1.8 | Good |
| 14 | L | 412 | 248 | 35 | 1.6 | Bad |
| 15 | M | 385 | 258 | 34 | 1.6 | Bad |
| 16 | N | 434 | 266 | 32 | 1.5 | Bad |
| 17 | O | 380 | 224 | 36 | 1 | Good |
| 18 | P | 434 | 281 | 30 | 1.4 | Bad |
| 19 | Q | 375 | 225 | 38 | 1.9 | Bad |

According to Tables 1 to 4, it can be seen that specimens satisfying the alloying composition, microstructure, and process conditions of the present disclosure not only have a tensile strength of 390 MPa or more, elongation of 28% or more, r value of 1.2 or more, but also have excellent surface properties. On the other hand, it can be seen that specimens not satisfying at least one of the alloying composition, microstructure, and process conditions of the present disclosure do not simultaneously secure a tensile strength of 390 MPa or more, elongation of 28% or more, r value of 1.2 or more, and excellent surface properties.

Therefore, according to an aspect of the present disclosure, a plated steel sheet having high strength, excellent formability, and excellent surface quality, and a method for manufacturing the same may be provided.

While example embodiments have been shown and described above, it will be apparent to those skilled in the art that modifications and variations could be made without departing from the scope of the present disclosure as defined by the appended claims.

**Claims**

1.   A plated steel sheet, comprising

base iron; and a plating layer provided on at least one surface of the base iron,
wherein the base iron includes by weight:

0.002 to 0.01% of carbon (C), 0.1% or less of silicon (Si), 0.4 to 1.0% of manganese (Mn), 0.04 to 0.1% of phosphorus (P), 0.01% or less of sulfur (S), 0.005% or less of nitrogen (N), 0.1% or less of aluminum (S.Al), 0.005 to 0.03% of titanium (Ti), 0.01 to 0.05% of niobium (Nb), 0.06 to 0.1% of copper (Cu), 0.0015% or less of boron (B), a content of molybdenum(Mo) in which YM, defined by the following Relational Expression 1, satisfies a range of 0.03 or more and 0.1 or less, with a balance of Fe and inevitable impurities;
wherein the base iron includes ferrite as a matrix structure,
wherein in the base iron, E, defined by the following Relational Expression 2, satisfies a range of 0 or more and 60 or less,

[Relational Expression 1]

$$YM = [P] * (1 + 0.5*[Mo] + 0.1*[Mn])$$

where [P], [Mo], and [Mn] refer to contents (weight %) of phosphorus (P), molybdenum (Mo), and manganese (Mn) included in the base iron, respectively,

[Relational Expression 2]

$$E = 1250*YM - 5*X$$

where YM is calculated by the Relational Expression 1, X refers to an average grain size (um) of the ferrite.

2.   The plated steel sheet of claim 1, wherein in a three-dimensional orientation density function (ODF) {Φ1,Φ, Φ2} of a surface portion of the base iron, an intensity of the ODF {0°,0°,45°} is 2.0 or less, and an intensity of ODF{30°, 55°,45°} is 5 or more and 9 or less.

3.   The plated steel sheet of claim 1, wherein a fraction of the ferrite is 95% or more by area, and an average grain size of the ferrite is 15 um or less.

4.   The plated steel sheet of claim 1, wherein the plating layer is any one selected from a zinc-based plating layer, an aluminum-based plating layer, an alloying zinc-based plating layer, or an alloying aluminum-based plating layer.

5.   The plated steel sheet of claim 1, wherein the plated steel sheet has a tensile strength of 390 MPa or more, an elongation of 28% or more, and an r value of 1.2 or more.

6.   A method for manufacturing a plated steel sheet, comprising operations of:

heating a slab including by weight: 0.002 to 0.01% of carbon (C), 0.1% or less of silicon (Si), 0.4 to 1.0% of manganese (Mn), 0.04 to 0.1% of phosphorus (P), 0.01% or less of sulfur (S), 0.005% or less of nitrogen (N), 0.1% or less of aluminum (S.Al), 0.005 to 0.03% of titanium (Ti), 0.01 to 0.05% or less of niobium (Nb), 0.06 to 0.1% of copper (Cu), 0.0015% or less of boron (B), a content of molybdenum(Mo), in which YM, defined by the following Relational Expression 1, satisfies a range of 0.03 or more and 0.1 or less, with a balance of Fe and inevitable impurities at a temperature within a range of 1100 to 1300°C;
subjecting the heated slab to hot rolling at a finish rolling temperature($T_f$) satisfying the following Relational Expression 3 to obtain a hot-rolled steel sheet;
coiling the hot-rolled steel sheet in a temperature range of 600 to 650°C;
pickling the hot-rolled steel sheet and then cold rolling the hot-rolled steel sheet at a reduction ratio of 70 to 83% to obtain a cold-rolled steel sheet;
annealing the cold-rolled steel sheet in a temperature range of 750 to 830°C;
immersing the annealed cold-rolled steel sheet in a plating bath to obtain a plated steel sheet; and
optionally alloying the plated steel sheet in a temperature range of 480 to 610°C,

[Relational Expression 1]

$$YM = [P] * (1 + 0.5*[Mo] + 0.1*[Mn])$$

where [P], [Mo], and [Mn] refer to contents (weight %) of phosphorous (P), molybdenum (Mo), and manganese (Mn)included in the slab, respectively,

[Relational Expression 3]

$$920 - 300 * [3*[P] - \{(31/48)*[Ti] + (31/93)*[Nb]\}] < T_f(°C) < 920 + 300 * [3*[P] - \{(31/48)*[Ti] + (31/93)*[Nb]\}]$$

where [P], [Ti], and [Nb] refer to contents (weight %) of phosphorous (P), titanium (Ti), and niobium (Nb)included in the slab, respectively.

7. The method for manufacturing a plated steel sheet of claim 6, wherein the plating bath is any one selected from a zinc-based plating bath or an aluminum-based plating bath.

8. The method for manufacturing a plated steel sheet of claim 6, further comprising an operation of:
subjecting the plated steel sheet or the alloyed plated steel sheet to temper rolling at the reduction ratio of 0.4 to 1.2%.

## INTERNATIONAL SEARCH REPORT

| International application No. |
| --- |
| **PCT/KR2021/018611** |

| | |
| --- | --- |
| **A. CLASSIFICATION OF SUBJECT MATTER** | |
| **C22C 38/00**(2006.01)i; **C22C 38/02**(2006.01)i; **C22C 38/04**(2006.01)i; **C22C 38/06**(2006.01)i; **C22C 38/14**(2006.01)i; **C22C 38/16**(2006.01)i; **C21D 9/46**(2006.01)i; **C21D 8/02**(2006.01)i; **C23C 2/06**(2006.01)i | |
| According to International Patent Classification (IPC) or to both national classification and IPC | |

| **B. FIELDS SEARCHED** |
| --- |
| Minimum documentation searched (classification system followed by classification symbols) |
| C22C 38/00(2006.01); B21B 3/00(2006.01); C21D 9/46(2006.01); C22C 38/06(2006.01); C22C 38/14(2006.01); C23C 2/06(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 도금(plating), 몰리브덴(Mo), 페라이트(ferrite), 인(P), 티타늄(Ti), 니오븀(Nb) |

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-303180 A (KAWASAKI STEEL CORP.) 31 October 2001 (2001-10-31)<br>See paragraph [0066], claims 1-2, 4, 10 and 14 and table 3-1. | 1-8 |
| A | JP 2012-233229 A (NIPPON STEEL CORP.) 29 November 2012 (2012-11-29)<br>See claims 1-4. | 1-8 |
| A | JP 2007-146275 A (NIPPON STEEL CORP.) 14 June 2007 (2007-06-14)<br>See claims 1-2 and 5. | 1-8 |
| A | JP 2003-105513 A (NIPPON STEEL CORP.) 09 April 2003 (2003-04-09)<br>See claims 1 and 4-8. | 1-8 |
| A | JP 2004-300563 A (NIPPON STEEL CORP.) 28 October 2004 (2004-10-28)<br>See claims 1 and 5-6. | 1-8 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 March 2022** | **11 March 2022** |
| Name and mailing address of the ISA/KR | Authorized officer |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018611**

| Patent document cited in search report | | | Publication date (day/month/year) | Patent family member(s) | | | Publication date (day/month/year) |
|---|---|---|---|---|---|---|---|
| JP | 2001-303180 | A | 31 October 2001 | JP | 3812279 | B2 | 23 August 2006 |
| JP | 2012-233229 | A | 29 November 2012 | JP | 5712771 | B2 | 07 May 2015 |
| JP | 2007-146275 | A | 14 June 2007 | JP | 5058508 | B2 | 24 October 2012 |
| JP | 2003-105513 | A | 09 April 2003 | AU | 2002-304255 | A1 | 23 December 2002 |
| | | | | BR | 0210265 | A | 12 July 2005 |
| | | | | BR | 0210265 | B1 | 09 April 2013 |
| | | | | CA | 2449604 | A1 | 19 December 2002 |
| | | | | CA | 2449604 | C | 01 April 2008 |
| | | | | CN | 101125472 | A | 20 February 2008 |
| | | | | CN | 101125472 | B | 17 April 2013 |
| | | | | CN | 101125473 | A | 20 February 2008 |
| | | | | CN | 101125473 | B | 18 July 2012 |
| | | | | CN | 101264681 | A | 17 September 2008 |
| | | | | CN | 101264681 | B | 27 March 2013 |
| | | | | CN | 1639375 | A | 13 July 2005 |
| | | | | DE | 60220191 | T2 | 17 January 2008 |
| | | | | EP | 1504134 | A2 | 09 February 2005 |
| | | | | EP | 1504134 | B1 | 16 May 2007 |
| | | | | JP | 2003-055751 | A | 26 February 2003 |
| | | | | JP | 2003-105492 | A | 09 April 2003 |
| | | | | JP | 2003-171752 | A | 20 June 2003 |
| | | | | JP | 3898923 | B2 | 28 March 2007 |
| | | | | JP | 3898924 | B2 | 28 March 2007 |
| | | | | JP | 3898925 | B2 | 28 March 2007 |
| | | | | JP | 4331915 | B2 | 16 September 2009 |
| | | | | KR | 10-0747133 | B1 | 09 August 2007 |
| | | | | KR | 10-0753244 | B1 | 30 August 2007 |
| | | | | KR | 10-2004-0065996 | A | 23 July 2004 |
| | | | | KR | 10-2007-0026882 | A | 08 March 2007 |
| | | | | KR | 10-2007-0026883 | A | 08 March 2007 |
| | | | | TW | 573021 | B | 21 January 2004 |
| | | | | US | 2004-0202889 | A1 | 14 October 2004 |
| | | | | US | 2008-0035247 | A1 | 14 February 2008 |
| | | | | US | 2009-0272467 | A1 | 05 November 2009 |
| | | | | US | 7267890 | B2 | 11 September 2007 |
| | | | | US | 7824509 | B2 | 02 November 2010 |
| | | | | US | 8216397 | B2 | 10 July 2012 |
| | | | | WO | 02-101112 | A2 | 19 December 2002 |
| | | | | WO | 02-101112 | A3 | 14 October 2004 |
| JP | 2004-300563 | A | 28 October 2004 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004169160 A